# EUROPEAN PATENT APPLICATION

(11) **EP 3 582 377 A1**
(43) Date of publication of application: **18.12.2019**
(21) Application number: 18751821.2
(22) Date of filing: 01.02.2018
(51) Int. Cl.: H02K 53/00, H02N 11/00, F02B 63/04, H02J 3/04, H02J 9/04

(54) **ELECTRICITY GENERATION SYSTEM**

(30) Priority: 13.02.2017 BR 202017002844 U
(71) Applicant: Nascimento, Luiz Carlos, 26560-461 Rio De Janeiro (BR)
(72) Inventor: Nascimento, Luiz Carlos, 26560-461 Rio De Janeiro (BR)
(74) Representative: Schmidt, Steffen J.
(86) International application number: PCT/BR2018/050020
(87) International publication number: WO 2018/145181

(57) **Abstract**

The present invention relates to an electric power generator system/set (40) configured to generate fuel-free electric power having a fairing (12), a turbine (1), a gearbox (6), an alternator (10) and a hydraulic pump motor (14). Said hydraulic pump motor (14) being configured to emit an oil jet against the vanes (2) of the turbine (1), causing it to rotate and generate mechanical power.

Said mechanical power generated by the rotation of the turbine (1) is transmitted to the gearbox (6), enhancing this mechanical power and transmitting it to the alternator (10), configured to transform the mechanical power generated by the turbine (1) in electric power.

## Description

### Object Field

The present invention consists of a electric power generator set/system with hydraulic oil drive for use in industrial, residential and commercial applications.

### Background of the Invention

Electric power generator sets/systems are medium and large equipment configured to provide electricity, ensuring safety and convenience for residents, customers and employees from different industries and environments.

Said electric power generator set is a very high performance equipment, which presents great safety during its operation, being commonly manufactured with resistant structure.

The use of electric power generator sets is indicated for the most varied environments, especially for establishments that cannot run out of electricity, such as hospitals, schools, airports, large events and supermarkets.

The alternators and power generators that make up the power generator sets have characteristics that convert mechanical power into electrical power, based on the phenomenon of electromagnetic induction.

The dynamo (alternator) direct current generator works by converting such mechanical power contained in the rotation of an axis into the intensity of a magnetic field, produced by a magnet, so that the rotation of the axis induces a voltage at the terminals of the motor windings, where connected to loads lead to the circulation of electric currents, thus generating electrical power.

In the prior art, electric power generator sets are known, which can be assembled by means of two distinct drive types: combustion engines (diesel, gas and gasoline) and wind turbines.

These two electric power generator sets drive their alternators (dynamos) through a combustion engine, or through wind turbines, generating electricity through alternating current.

However, the use of these prior art electric power generator sets reveals some drawbacks, the drawbacks being outlined below.

In the use of electric power generator sets powered by combustion engines, the drawback is a high fuel consumption for their use, thus implying a high operating cost. Moreover, this combustion engine drive, due to the burning of fuel for its operation, generates a great environmental pollution, thus becoming very harmful to the environment.

However, this combustion engine drive also has a low operating efficiency because it requires very high fuel consumption to generate sufficient mechanical power.

Regarding the use of electric power generator sets, which use wind turbines to drive them, it is noted that, although they are excellent sources in the concept of environmental protection, they need their own wind currents and cannot thus be applied anywhere.

In addition, wind turbines are equipped with very large diameter propellers, generating a mechanical design that further limits their application in some geographical regions, with great limitation in urban areas.

Thus, there is no prior art electric power generator set with a drive that does not consume the fuels required to be processed and transformed into mechanical power, significantly reducing operating costs due to non-fuel consumption and consequently reducing environmental pollution.

Moreover, in the state of the art, there is no electric power generator with a significantly smaller design than electric power generators that do not perform combustion of fuels as a source of mechanical energy.

### Purposes of the Invention

The present invention aims to provide an electric power generator set that is not based on the consumption of any form of conventional fuel as a driver.

The present invention also aims to provide an electric power generator set with low operating cost and low environmental impact.

Finally, the present invention also aims to provide an electric power generator set with a design of significantly smaller dimensions than any other in the prior art.

### Summary of the Invention

In its preferred embodiment, the present invention discloses a power system / generator set comprising: a prismatic shaped cowling having a base, four side walls and an upper wall; a turbine provided with a radial face and two longitudinal faces, vanes being arranged along its radial face, the turbine being fixed within the fairing; a hydraulic pump motor, arranged above the turbine also inside the fairing; a gearbox associated with the turbine; and an alternator associated with the gearbox.

The turbine comprises an axis passing through the center of the longitudinal faces of the turbine, the axis being fixed to one of the fairing sidewalls and passing through the fairing sidewall parallel to the fairing sidewall to which it is attached. The turbine comprises a rotating part and a fixed part, the rotating part being associated with the fixed part by means of bearings.

Said turbine also comprises a double crossarm disposed on its longitudinal faces, so that the two ends of the double crossarm are fixed to the rotating part of the turbine, communicating them with the axis.

The end of the turbine axis, which is the end through the fairing, is associated with a gearbox input axis, and this association of the turbine axis with the gearbox input axis is made by means of a flexible sleeve.

The gearbox comprises an output axis, and the alternator comprises an input axis, the gearbox output axis being associated with the alternator input axis, which association of the gearbox output axis with the alternator input axis is made by means of a flexible sleeve.

The hydraulic oil pump motor comprises a nozzle hose to emit an oil jet against the turbine vanes. The electric power generator set also comprises a tank disposed inside the fairing, below the hydraulic oil pump motor, storing and supplying the hydraulic oil to the motor pump by means of a suction hose.

The electric generator set of the present invention also comprises a circuit having: an electric rectifier, powered by the alternator output of the electric generator set; an accumulating source of electricity; a manual or automatic starting device; an alternating current direct current inverter that feeds the hydraulic oil pump motor at its start; a commutator block, which receives power from the accumulator source of electricity at start-up and under steady-state conditions, receives power from the alternator output of the power generator set; a power block from the power generator set; a control device and a thermal protection for motorcycle hydraulic oil pump.

In steady-state condition, the power block and the commutator block feed the hydraulic oil pump motor, while the rectifier connected to the alternator output floats the accumulator source of electricity.

### Brief Description of the Designs

The present invention is more fully described based on the respective figures:
Figure 1 depicts a side view of the electric power generator set of the present invention.
Figure 2 depicts a front view of the turbine, hydraulic oil assembly and turbine fairing of the electric power generator set of the present invention.
Figure 3 depicts the power circuit of the electric power generator set along with the load.

### Detailed Description of the Invention

The present invention discloses an electric power generator system/set 40 having a self-powered hydraulic oil drive configured to generate electric power without the need for fuel combustion or a large mechanical design.

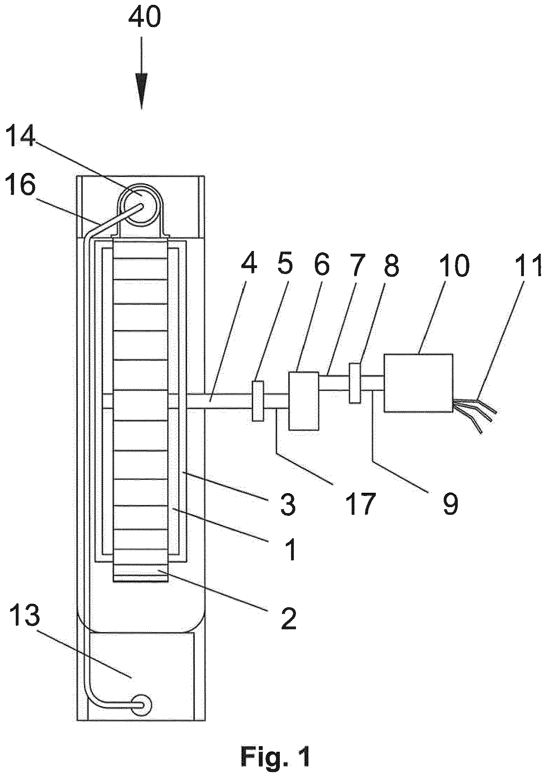

Said generator set comprises a turbine 1, a gearbox 6, an alternator 10, a hydraulic pump motor 14 and a fairing 12 (see Figure 1), each of its components and functions being described separately below.

Fairing 12 consists of a protective structure for the electric power generator set 40, which is configured to protect the turbine 1; the hydraulic oil pump motor 14; a hydraulic oil reservoir 13; and a hydraulic oil hose 16 disposed therein.

Said fairing 12, in its preferred configuration, has a prismatic shape, preferably a parallelepiped, and is therefore provided with a base, four side walls and an upper wall.

Alternatively, the fairing 12 may be provided with other shapes, such as cubic, which is configured only for protection of the turbine 1 and the hydraulic pump motor 14, even facilitating the transport of the electric power generator set 40. Fairing 12 is fully closed, as the oil that will drive the turbine 1 will be in a closed hydraulic oil circuit within this fairing. This closed loop hydraulic oil circuit will make it possible to use this fluid for a long time without change and without pollution to the environment.

Turbine 1 is the element configured to provide mechanical power to the electric power generator set 40 of the present invention, which is provided with two longitudinal faces and one radial face with a disc shape.

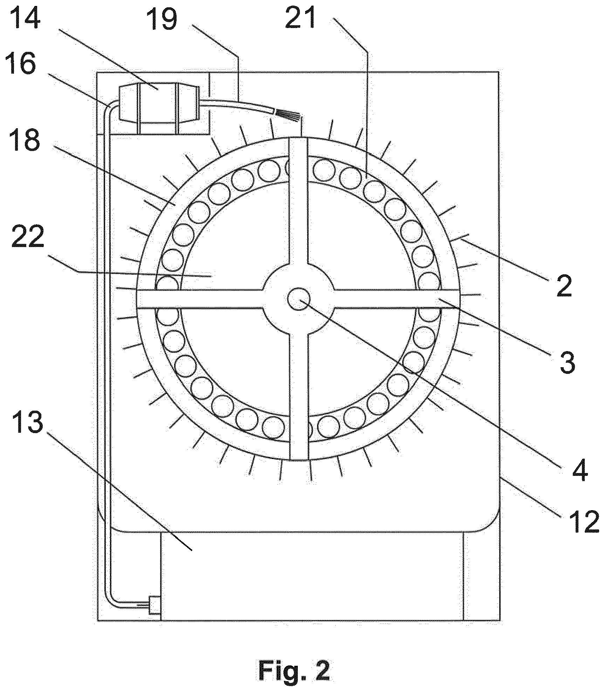

Such turbine 1 comprises a rotatable part 18 which is easily rotated and preferably made possible by means of roller bearings 19 disposed in the fixed part 21 of the turbine 1, ie non-rotating part, see Figure 2.

Alternatively, turbine 1 may be provided with ball bearings and other types of bearings, which are configured only to facilitate rotation of its rotating part 18.

A sealing 22 is also carried out in the fixed part 21 of the turbine with the roller bearings 19, thus ensuring the stability of this element as it rotates and avoiding detrimental looseness and chatter.

Said turbine 1 is preferably provided with vanes 2 along its radial face, which are configured to cause the turbine 1 to rotate upon receiving a pressure jet of oil squirted by the hydraulic pump motor 14. There is a hydraulic oil circuit and a storage reservoir 13 and collection of the spread oil over the turbine 1 vanes 2 so that the oil will return to the reservoir tank 13 to continue to be pumped to drive turbine 1. Outside fairing 12 there is gearbox 6 and alternator 10 with their respective axis and couplings through flexible sleeves.

Turbine 1 also comprises an axis 4, passing through the center of its two longitudinal faces. The axis 4 allows the turbine 1, in a preferred configuration, to be supported on the sidewalls of the fairing 12, this axis being supported on two sidewalls of the fairing 12, being fixed in one of the sidewalls and passing through the other sidewall of the fairing 12, parallel to the side wall to which it is attached.

In alternate configurations, turbine 1 may be supported by means of trestles and roller bearings or other equipment capable of supporting turbine 1 and allowing its rotation, especially of its axis 4.

In addition to the turbine 1, a double crossarm 3 is arranged parallel to the longitudinal faces thereof, and its axis 4, preferably welded to the double crossarm 3, to allow the turbine 1 to rotate along the double crossarm 3 by dragging it in its spin.

Preferably, double crossarm 3 consists of a double crossarm with round bars having both sides attached to the rotating part 18 of turbine 1, thus allowing turbine axis 4 fixed on both sides of double crossarm 3 to rotate with the movement of double crossarm 3.

One end of axis 4 of turbine 1, i.e. the through end of the sidewall of fairing 12, is associated with gearbox 6, thereby enabling the rotation of turbine 1 to be transmitted to gearbox 6. Said association is made by means of an elastic sleeve 5, which allows to associate the input axis 17 of the gearbox 6 with the axis 4 of turbine 1.

The elastic sleeve 5 in its preferred configuration consists of a common coupling used to join two axes, in this case the turbine axis 4 and the gearbox 6 input axis 17.

The gearbox 6 consists of an element configured to perform a rotation speed variation. Said variation in rotational speed is found on its input axis 17 and on an output axis 7, so that the input axis 17 of gearbox 6, that is, the side associated with axis 4 of turbine 1, has a low speed and its output axis 7 has a high speed.

In its preferred configuration, the gearbox 6 consists of a gear speed multiplier, however, in alternative configurations, this may be a speed multiplier by means of straps or belts, having as function only to vary the rotational speed of input axis 17 relative to output axis 7.

The output axis 7 of gearbox 6 is associated with alternator 10, which alternator 10 is configured to receive the mechanical power transmitted from turbine 1 to gearbox 6 and thus transform that mechanical power into electrical power.

The association of the output axis 7 with alternator 10 is preferably effected by means of an elastic sleeve 8, joining the input axis of alternator 9 with the output axis 7 of gearbox 6.

Thus, the high rotation of this output axis 7 of gearbox 6 transmits a mechanical power to the input axis of alternator 9 and, consequently, to alternator 10, causing it to transform this mechanical power into electrical power and transmit it through its output 11.

The hydraulic pump motor 14 consists of the element configured to transmit an oil jet against the vanes 2 of turbine 1, thus causing it to rotate and generate the mechanical power required to generate electrical power.

The oil jet is generated by a nozzle hose 19 disposed on the hydraulic pump motor 14 to increase the jet pressure and thus provide the pressure required to rotate the turbine 1.

Said hydraulic pump motor 14 aspirates a hydraulic oil from an oil tank 13, disposed just above turbine 1, causing all the oil transmitted against turbine 1 to collide with its vanes 2 and to return to tank 13, thus allowing it to be reused in a closed circuit.

This suction of the hydraulic oil from reservoir 13 to the hydraulic pump 14 is made by means of a suction hose 16, which suction hose 16 is configured to communicate these two elements.

Having described all the elements that make up the electric power generator system/set 40 of the present invention, as well as their functions, their electric power circuit is described below.

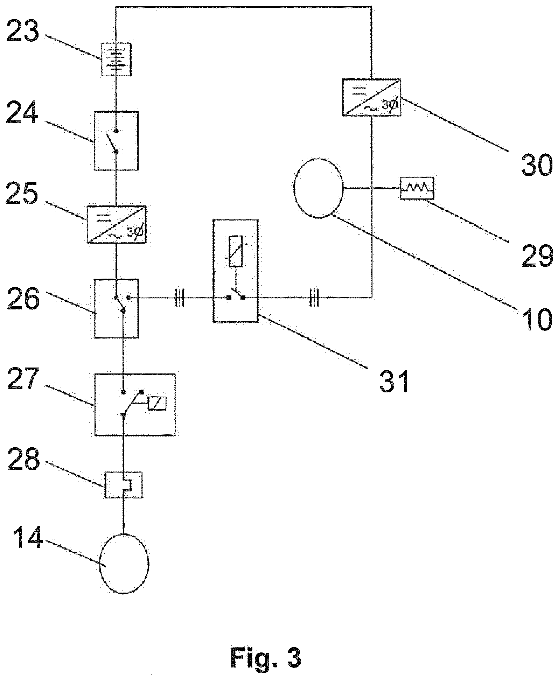

The electric power circuit comprises an accumulator source of electricity 23, a manual or automatic starter device 24, an inverter 25, a switch 26, a control device 27, a thermal protection 28, a power block 31, a electrical charge 29 and a rectifier block 31, see Figure 3.

The accumulator source of electricity 23 powers the starter device 24, whether manual or automatic. The direct current electric power is transformed into three phase or single phase current through inverter 25. The switch 26 powers the control device 27, which is interconnected to the thermal protection 28.

In this way, the hydraulic pump motor 14 is started, starting the rotation of turbine 1, until it reaches a regime speed. Upon reaching this speed, switch 26 transfers the power supply from the hydraulic pump motor 14 to the power supply from power block 31, which is connected to output 11 of alternator 10.

At this time, alternator 10 is supplying electrical charge 29, as well as rectifier 30, maintaining the fluctuation of the direct current power accumulator 23.

The wiring circuit feeds back, via power block 31 and switch 26, the hydraulic pump motor 14 into steady-state condition, while starting is fed by direct current power accumulator 23, and under steady-state condition, powered by power block 31.

Thus, in the steady-state condition, the electric power generated by the electric power generator set 40, more specifically by the output 11 of its alternator 10, is capable of feeding the hydraulic pump motor 14, thus allowing it to continue operating in a steady-state and continue the power generation.

Thus, having been described both the components of the electric power generator set 40, as well as its electric power circuit, it is concluded that the present invention meets the proposed objectives, and its consumption is not based on any conventional fuel form of combustion as a driver.

In addition, the present invention also significantly reduces the operating cost and environmental damage by using the electric power generator set 40 of the present invention, with no fuel costs or gas emissions from burning them.

However, the electric power generator set 40 of the present invention also reveals significantly smaller dimensions as compared to other electric power generator sets, as it is not based on fuel consumption, and does not reveal space or environmental constraints for its use.

Therefore, it should be understood that the components and power circuitry of the electric power generator set 40 are just some of the embodiments and examples of situations that could occur, the actual scope of the object protection of the present invention is defined in the claims.

## Claims

1. Electric power generator system (40), **characterized by** the fact that it comprises:
- a prismatic fairing (12) having a base, four side walls and an upper wall;
- a turbine (1) having one radial face and two longitudinal faces, vanes (2) being arranged along its radial face, the turbine (1) being fixed within the fairing (12);
- a hydraulic oil pump motor (14) disposed above the turbine (1) also inside the fairing (12);
- a gearbox (6) associated with the turbine (1); and
- an alternator (10) associated with the gearbox (6).

2. Electric power generator system (40) according to Claim 1, **characterized by** the fact that the turbine (1) comprises an axis (4) passing through the center of the longitudinal faces of the turbine (1), the axis (4) being supported on two sidewalls of the fairing (12), being fixed to a sidewall of the fairing (12) and passing through the sidewall of the fairing (12) parallel to the sidewall of the fairing (12) to which it is fixed.

3. Electric power generator system (40) according to claim 1, **characterized by** the fact that the turbine (1) comprises a rotating part (18) and a fixed part (21), the rotating part (18) being associated with the fixed part (21) by means of bearings (19).

4. Electric power generator system (40) according to either claim 1 or claim 3, **characterized by** the fact that the turbine (1) comprises a double crossarm (3) disposed on its longitudinal faces.

5. Electric power generator system (40) according to either of claims 3 or 4, **characterized by** the fact that the two ends of the double crossarm (3) are fixed to the rotating part (18) of the turbine (1), communicating with the axis (4) of the turbine (1).

6. Electric power generator system (40) according to Claim 2, **characterized by** the fact that the end of the axis
(4) of the turbine (1), which passes through end of the fairing (12), is associated with an input axis (17) of the gearbox (6).

7. Electric power generator system (40) according to Claim 6, **characterized by** the fact that the association of the axis (4) of the turbine (1) with the input axis (17) of gearbox (6) is made by means of a flexible sleeve (5).

8. Electric power generator system (40) according to claim 1, **characterized by** the fact that the gearbox
(6) comprises an output axis (7), and the alternator (10) comprises an input axis (9), the gearbox (6) output axis (9) being associated with the alternator (10) input axis (9).

9. Electric power generator system (40) according to claim 8, **characterized by** the fact that the association of the output axis (7) of the gearbox (6) with the input axis (9) of the alternator (10) is made by means of a flexible sleeve (8).

10. Electric power generator system (40) according to Claim 1, **characterized by** the fact that the hydraulic pump motor (14) comprises a nozzle hose (19) to emit an oil jet against the turbine (1) vanes (2).

11. Electric power generator system (40) according to Claim 10, **characterized by** the fact that the electric power generator set (40) comprises a tank (13) disposed inside the fairing (12) below the hydraulic pump motor (14) storing and supplying the oil to the hydraulic pump motor (14) by means of a suction hose (16).

12. Electric power generator system (40) according to Claim 1, **characterized by** the fact that it comprises a circuit having:
- an electricity rectifier (30), powered by the alternator output (10) of the electric power generator set (40);
- an accumulating source of electricity (23);
- a manual or automatic starter device (24);
- an alternating current direct current inverter (25) which feeds the hydraulic oil pump motor (14) at its start-up;
- a switch block (26), which receives power from the accumulating source of electricity (23) at startup and under steady-state conditions, receives power from the output (11) of the alternator (10) of the electric power generator set (40);
- a power block (31) coming from the electric power generator set (40);
- a control device (27); and
- thermal protection (28) for hydraulic oil pump motor (14).

13. Electric power generator system (40) according to claim 12, **characterized by** the fact that, under steady-state condition, the power block (31) and the switch block (26) feed the hydraulic pump motor (14) while the rectifier (30) connected to the alternator output (10) floats the accumulating source of electricity (23).
